# EUROPÄISCHE PATENTSCHRIFT

(11) **EP 2 399 108 B1**
(45) Veröffentlichungstag und Bekanntmachung des Hinweises auf die Patenterteilung: **04.03.2015**
(21) Anmeldenummer: 10701669.3
(22) Anmeldetag: 27.01.2010
(51) Int. Cl.: G01K 17/20, F22B 37/38

(54) **MESSEINRICHTUNG FÜR EINEN WÄRMETAUSCHER**
MEASURING DEVICE FOR A HEAT EXCHANGER
DISPOSITIF DE MESURE POUR UN ÉCHANGEUR THERMIQUE

(30) Priorität: 19.02.2009 DE 102009009592
(43) Veröffentlichungstag der Anmeldung: 28.12.2011
(73) Patentinhaber: Clyde Bergemann GmbH Maschinen- und Apparatebau, 46485 Wesel (DE)
(72) Erfinder: FRACH, Manfred, 46485 Wesel (DE); MUßMANN, Bernd, 47495 Rheinberg (DE)
(74) Vertreter: Rössler, Matthias
(86) Internationale Anmeldenummer: PCT/EP2010/050915
(87) Internationale Veröffentlichungsnummer: WO 2010/094537

(56) Entgegenhaltungen:
- WO-A2-2004/036116
- US-A- 3 276 437
- US-A- 4 488 516
- US-A- 4 527 908
- US-A1- 2004 163 969
- US-B1- 6 485 174
- TALER J ET AL: "Identification of local heat flux to membrane water-walls in steam boilers" FUEL, IPC SCIENCE AND TECHNOLOGY PRESS, GUILDFORD, GB LNKD, Bd. 88, Nr. 2, 13. September 2008 (2008-09-13), Seiten 305-311, XP025677919 ISSN: 0016-2361 DOI: 10.1016/J.FUEL.2008.08.011
- NEAL S B H C ET AL: "THE MEASUREMENT OF RADIANT HEAT FLUX IN LARGE BOILER FURNACES-II. DEVELOPMENT OF FLUX MEASURING INSTRUMENTS" INTERNATIONAL JOURNAL OF HEAT AND MASS TRANSFER, PERGAMON PRESS, GB LNKD, Bd. 23, Nr. 7, 1. Juli 1980 (1980-07-01), Seiten 1023-1031, XP001188101 ISSN: 0017-9310 DOI: 10.1016/0017-9310(80)90076-9

## Beschreibung

Die vorliegende Erfindung betrifft eine Messeinrichtung für einen Wärmetauscher, der eine mit Stegen beabstandete Druckrohranordnung mit einer Feuerungsseite und einer Isolationsseite aufweist. Weiterhin betrifft die Erfindung ein Verfahren zur Bestimmung von Wärmeflüssen an einer Druckrohranordnung, einen Wärmetauscher mit einer Messeinrichtung sowie die Verwendung einer Messeinrichtung zur Messung des Wärmeflusses.

Im Stand der Technik ist es bekannt, die Druckrohranordnungen, die in der Regel Bestandteile von Wärmetauschern oder Wärmetauscherwänden bilden, hinsichtlich des darin stattfindenden Wärmeflusses zu überwachen. So ist bspw. aus der WO 2004/036116 A2 eine Wärmeflussmesseinrichtung für Druckrohre sowie ein Verfahren zum Messen eines Wärmeflusses durch Druckrohre bekannt. Die darin beschriebenen Wärmeflusssensoren sind als integraler Bestandteil der Druckrohre ausgebildet. Aufgrund der hohen Kosten ist es in der Praxis jedoch wünschenswert, die Wärmeflusssensoren in der erforderlichen Anzahl zu reduzieren. Hierdurch können jedoch Lücken bei der Überwachung des Wärmeflusses an Druckrohranordnungen entstehen, so dass in diesen Lücken ggf. auftretende Anlagerungen nicht rechtzeitig erkannt und abgereinigt werden können.

Aus dem Artikel Taler I. et al..: "Identification of local heat flux to membrane water-walls in steam boilers", in: "FUEL". IPC Science and Technology Press, Guildford, GB LNKD, Bd. 88. Nr. 2, 13. September 2008, S. 305-311. ISSN: 0016-2361 ist eine Messeinrichtung für einen Wärmetauscher bekannt, bei der vier Wärmesensoren auf einer Feuerungsseite eines Druckrohrs der Messeinrichtung und ein weiterer Wärmesensor auf der gegenüberliegenden Seite des Druckrohrs angeordnet sind.

Zudem offenbart die US-A-4,527,908 eine Messeinrichtung für einen Wärmetauscher, bei dem an einer Feuerungsseite eines Druckrohrs zwei Temperatursensoren zur Bestimmung wenigstens zweier Temperaturen und ein zusätzlicher Temperatursensor auf der gegenüberliegenden Seite des Druckrohrs zur Messung einer dritten Temperatur angeordnet sind.

Darüber hinaus ist auch aus dem Artikel Neal S. B. H. C. et al.: "The measurement of radiant heat flux in large boiler furnances - II. Development of flux measuring instruments", in: "International Journal of Heat and Mass Transfer". Pergamon Press, GB LNKD, Bd. 23, Nr. 7, 1. Juli 1980. S. 1023-1031. ISSN: 0017-9310 eine Messeinrichtung für Wärmetauscher bekannt, bei denen sowohl auf einer Feuerungsseite eines Druckrohrs als auch auf einer dieser Feuerungsseite gegenüberliegenden Seite Temperatursensoren angeordnet sind.

Aufgabe der vorliegenden Erfindung ist daher, die sich aus dem Stand der Technik ergebenden Probleme zumindest teilweise zu lösen und insbesondere eine verbesserte Erfassung der Wärmeströme an Druckrohranordnungen zu schaffen, wobei die Anzahl der benötigten Wärmestromsensoren gegenüber bekannten Vorrichtungen beibehalten oder sogar reduziert werden kann.

Diese Aufgaben werden mit einer Messeinrichtung gemäß dem Patentanspruch 1 sowie einem Verfahren gemäß Patentanspruch 5 gelöst. Vorteilhafte Weiterbildungen sind in den abhängig formulierten Patentansprüchen angegeben. Es ist darauf hinzuweisen, dass die in den Patentansprüchen einzeln angeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Zur Lösung dieser Aufgabe besteht die erfindungsgemäße Messeinrichtung aus einem Wärmetauscher, der so ausgebildet, dass der Wärmetauscher eine mit Stegen beabstandete Druckrohranordnung mit einer Feuerungsseite und einer Isolationsseite aufweist und mit mindestens einem Wärmestromsensor ausgeführt ist. Der Wärmestromsensor ist an der Feuerungsseite so angeordnet, dass dort wenigstens zwei Temperaturen T₁ und T₂ und deren Temperaturdifferenz ermittelbar sind. Weiterhin ist zusätzlich wenigstens ein Temperatursensor zur Messung einer Temperatur T₃ an der Isolationsseite und beabstandet zum Wärmestromsensor angeordnet, wobei der wenigstens eine Temperatursensor an einem Steg der Druckrohranordnung angeordnet ist.

Die vorliegende Erfindung hat erkannt, dass es bereits ausreichend ist, zusätzlich zu den Wärmestromsensoren, zusätzliche Temperatursensoren zur Ermittlung einer Temperatur T₃ im Umfeld des Wärmestromsensors zu verwenden. Mit Hilfe dieser beabstandet zum Wärmestromsensor angeordneten Temperatursensoren kann ein weiterer Wärmestrom zwischen dem zusätzlichen Temperatursensor T₃ und einem weiteren Punkt bekannter Temperatur ermittelt werden. Solche Punkte sind bspw. die Stellen, an denen die Temperatursensoren des Wärmestromsensors angeordnet sind. Ein anderer ganz besonderer Punkt mit bekannter Temperatur ist aber auch an der Innenseite der Druckrohre zu finden. Dort herrscht, wie die Erfindung festgestellt hat, an der gesamten Rohrinnenseite die annähernd gleiche Temperatur. Diese Temperatur entspricht dabei mit nur sehr geringen Abweichungen der Temperatur des darin durchströmenden Wasserdampfes. Die Innentemperatur der Druckrohre ist weitestgehend unabhängig von einer feuerungsseitigen oder isolationsseitigen Raumlage innerhalb des Druckrohres. Hierbei ist die Feuerungsseite, die einem Brennraum zugewandte Seite der Druckrohranordnung, und die Isolationsseite, die der Feuerung abgewandten Seite der Druckrohranordnung. Die Erkenntnis, dass nun die Oberflächentemperatur der gesamten Innenseite der Druckrohre annähernd gleich ist, nutzt die Erfindung aus, um einen Wärmestrom zwischen dem Ort des Temperatursensors, welcher die Temperatur T₃ misst, und einem nächstliegenden Punkte auf der Innenseite eines Druckrohres zu ermitteln. Im Ergebnis kann so mittels eines Wärmestromsensors und nur eines zusätzlichen Temperatursensors die Möglichkeit geschaffen werden, zwei unterschiedliche Wärmeströme zu bestimmen. Hierdurch können, gegenüber der bisher üblichen Anordnung von zwei Wärmestromsensoren, erhebliche Kosten eingespart werden und gleichzeitig eine verbesserte Überwachung der Druckrohranordnung im Hinblick auf bspw. Anlagerungen, Beschädigungen oder Verschmutzungen überwacht werden, die sich jeweils in geänderten Wärmeströmen niederschlagen.

Außerdem ist es für die Lebensdauer und die Belastung der verwendeten Temperatursensoren vorteilhaft, wenn der wenigstens eine zusätzliche Temperatursensor an der Isolationsseite der Druckrohranordnung angeordnet ist. Hierdurch werden die thermische Belastung und das Einwirken der Feuerung auf die relativ empfindlichen Temperatursensoren deutlich verringert, so dass diese günstiger ausgeführt werden können und gleichzeitig eine höhere Betriebsdauer erreichen.

Als günstig hat es sich dabei erwiesen, wenn der wenigstens eine Temperatursensor an einem Steg der Druckrohranordnung angeordnet ist. Die Stege dienen bei Druckrohranordnungen zur Verbindung der Druckrohre und bilden mit den Druckrohren zusammen eine Wärmetauscherwand. Ordnet man die Temperatursensoren nun an dem Steg an, so kann der Wärmestrom zwischen dem Ort des Temperatursensors am Steg und dem dazu nächstliegenden Punkt der Druckrohrinnenseite sehr genau berechnet werden. Insbesondere ist es dabei vorteilhaft, wenn der Temperatursensor in gleichem Abstand zu zwei benachbarten Druckrohren angeordnet ist, da er hierdurch bspw. gleichzeitig für Messungen an zwei benachbarten Druckrohren mit jeweils einem Wärmestromsensor geeignet ist. Weiterhin können die so ermittelten benachbarten Wärmeströme durch einen anschließenden Vergleich der Messwerte besonders gurt auf ihre Plausibilität hin überprüft werden.

Bevorzugt ist, dass einem/jedem Wärmestromsensor eine Mehrzahl von Temperatursensoren zugeordnet sind, bevorzugt mit einem Abstand, der nicht größer als 10 Meter, insbesondere 2 Meter, beträgt.

Unter einem Wärmestromsensor wird hier insbesondere ein Messfühler verstanden, bei dem mindestens zwei Thermoelemente entweder auf der Oberfläche eines Druckrohres aufgebracht oder alternativ in eine verdickte Leitung eingebracht sind. Bei einer Ausführungsvariante wird ein Thermoelement in einer lokalen Konkavität des Druckrohres eingebettet. Ganz besonders bevorzugt ist der Aufbau gemäß der WO 2004/036116 A2, die hierzu vollständig in Bezug genommen wird. Außerdem ist folgende Ausführung bevorzugt:
- Sensoren:: 4 Thermoelemente (redundante Ausführung)
- Messgenauigkeit:: +/- 2%
- Messbereich:: 0 bis 0,4 x 106 W/m² [Watt / Quadratmeter]
- Ausgangssignal:: mV [Millivolt]
- Kalibrierung:: einzeln kalibriert in V/Wm² [Volt / Watt und Quadratmeter].

Unter einem Temperatursensor wird insbesondere ein einzelner (Halbleiter-) Sensor (z.B. mit konstanter Pt-Kennlinie) verstanden, insbesondere nach Art eines PTC oder NTC. Bevorzugt sind zumindest 4 Temperatursensoren einem Wärmestromsensor zugeordnet.

Bei einer besonders bevorzugten Weiterbildung der Erfindung ist vorgesehen, dass mehrere Temperatursensoren um den Wärmestromsensor herum eine Linie, eine Kurve oder ein Gitter auf der Druckrohranordnung ausbilden. Ordnet man bspw. einen Temperatursensor oberhalb des Wärmestromsensors an und einen weiteren unterhalb des Wärmestromsensors, so spannen diese eine Linie oder eine Kurve auf. Die beiden Temperatursensoren und der Wärmestromsensor liegen dabei auf der Kurve oder Linie. Alternativ könnten die Temperatursensoren aber auch in einer kreisförmigen Kurve um den Wärmestromsensor herum angeordnet sein. Neben einer Kreisbahn ist auch jede beliebige geometrische Kurvenform denkbar. Ganz besonders bevorzugt ist es, wenn mehrere Temperatursensoren ein Gitter auf der Druckrohranordnung ausbilden, innerhalb dessen der Wärmestromsensor liegt. So kann mittels weniger zusätzlicher Temperatursensoren eine relativ großflächige Überwachung der Wärmeströme in der Druckrohranordnung realisiert werden.

Schließlich ist es für die Messeinrichtung vorteilhaft, wenn der wenigstens eine Temperatursensor und der wenigstens eine Wärmestromsensor mit einer Auswerteeinrichtung verbunden ist. Eine solche Auswerteeinrichtung kann bspw. eine programmierbare Rechenanlage sein, die eine Auswertung der ermittelten Temperaturen nach einem vorgegebenen Programm ausführt. Insbesondere kann als Ergebnis der Auswertung durch die Auswerteeinrichtung eine Steuerung von Reinigungseinrichtungen veranlasst werden, die bei ggf. festgestellten Verschmutzungen und Ablagerungen an den Druckrohranordnungen der Wärmetauscher Reinigungsmaßnahmen ausführen.

Die mittels der Messeinrichtung gewonnenen und ausgewerteten Daten dienen insbesondere zum Betrieb mindestens eines Reinigungssystems im Inneren des mit Rauchgas beströmten Wärmetauschers, so dass während des Betriebes bedarfsgerecht und gezielt die Feuerungsseite des Wärmetauschers von Schlacke, Asche und ähnlichem befreit werden kann. Zu diesem Zweck können zum Beispiel so genannte Wasserlanzenbläser oder Rußbläser, wie sie von der Anmelderin angeboten werden, eingesetzt werden.

Die vorstehend genannten Aufgaben werden ebenfalls gelöst von einem Verfahren zur Bestimmung von Wärmeflüssen an einer Druckrohranordnung mit einer Messeinrichtung gemäß einem der vorhergehenden Patentansprüche umfassend die Schritte:
a) Erfassen eines ersten Wärmestroms Q₁ durch Messen einer ersten Temperatur T₁ und einer zweiten Temperatur T, mittels eines Wärmestromsensors;
b) Messen wenigstens einer dritten Temperatur T₃ mit wenigstens einem weiteren Temperatursensor; und
c) Bestimmen eines zweiten Wärmestromes Q₂ mittels der gemessenen Temperaturen T₁, T₂, T₃ sowie bekannter Dampfparameter des das Druckrohr durchströmenden Dampfes.

Mit dem erfindungsgemäßen Verfahren ist es möglich, anhand einer geringen Anzahl von Messgrößen, die zudem einfach und preiswert zu ermitteln sind, zusätzliche Wärmeströme an der Druckrohranordnung zu ermitteln.

Bevorzugt ist in diesem Zusammenhang, dass der zweite Wärmestrom Q₂ berechnet wird.

Mit diesem Verfahren können bei reduziertem apparativem Aufwand gleichwohl redundante Daten über einen großen Bereich der Wärmeanlage gewonnen und zu deren Betrieb und/oder Reinigung eingesetzt werden.

Bei einer ganz besonders bevorzugten Ausführungsform der Erfindung ist vorgesehen, dass aus einer Mehrzahl von ermittelten Temperaturen, die in einem Abstand zum Wärmesensor gemessen wurden, eine Verteilung des Wärmestromes entlang einer Linie, Kurve oder über ein Gitter ermittelt wird. Hierdurch kann mit den aufgezeigten geringen Mitteln eine großflächige Erfassung der Wärmeströme realisiert werden, die anderenfalls eine Vielzahl von Wärmestromsensoren erfordern würde.

Bei einer weiteren vorteilhaften Ausbildung des erfindungsgemäßen Verfahrens ist vorgesehen, dass ein Wärmestrom in der Umgebung wenigstens eines Wärmestromsensors mittels der Auswerteeinrichtung ermittelt wird, wobei die Auswerteeinrichtung mindestens eine von dem wenigstens einem Temperatursensor gemessene Temperatur T₃ zur Berechnung des zweiten Wärmestroms nutzt. Die Auswerteeinrichtung kann dazu bspw. eine Rechenanlage sein, die zur Abarbeitung von Programmen geeignet ist. Mit Hilfe eines solchen Programms kann aus den genannten Messwerten neben dem vom Wärmestromsensor ermittelten Wärmestrom wenigstens ein weiterer Wärmestrom berechnet werden. Weiterhin kann die Auswerteeinrichtung auch mehrere zusätzliche Wärmeströme berechnen und anschließend zur Ermittlung einer flächigen Verteilung der ermittelten Wärmeströme verwendet werden, so dass etwa eine grafische Verteilung der Wärmeströme ausgegeben werden kann. Weiterhin kann in der Auswerteeinrichtung eine Auswertung der zusätzlich gewonnenen Informationen vorgenommen werden.

Aus dem zeitlichen Verlauf der Wärmeströme Q₁ und Q₂ bis Qₙ können jeweils Verschmutzungszustände ermittelt werden. Je nachdem wie der Verschmutzungszustand ist, können der Einsatz von so genannten online-Reinigungsgeräten (Klopfer, Rußbläser, Schlauchsysteme, Lanzenbläser, etc.) und/oder die Reinigungsfiguren der Wasserlanzenbläser noch selektiver angesteuert werden. Das heißt, es ist eine größere Auflösung von Reinigungsfiguren möglich und es ist mit den zusätzlichen gemessenen Wärmeströmen und Temperaturinformationen eine detailliertere Ansteuerung der Onload Reinigungsgeräte möglich. Beispielsweise sind hier die Wasserlanzenbläserfiguren zu nennen. Denn die zusätzlichen Informationen können dazu beitragen, die Reinigungsparameter innerhalb einer Reinigungsfigur zu verändern. Insbesondere könnte der erste Teil einer Reinigungsfigur mit intensiven Reinigungsparametern gereinigt werden, da der Verlauf des Wärmestroms Q₁ eine sehr starke Verschmutzung indiziert und der zweite Teil der Reinigungsfigur könnte mit weniger intensiven Reinigungsparametern gereinigt werden, da der Verlauf des Wärmestroms Q₂ eine geringere Verschmutzung darstellt.

Der weiterhin von der Erfindung beanspruchte Wärmetauscher mit einer Messeinrichtung nach einem der vorhergehenden Patentansprüche 1 bis 5 hat den Vorteil, dass diese mit nur einem oder sehr wenigen Wärmestromsensoren großflächig hinsichtlich der tatsächlich auftretenden Wärmeströme überwachbar ist.

Vorteilhaft ist zudem die Verwendung der erfindungsgemäßen Messeinrichtung bei der Ermittlung von Wärmeflüssen der Druckrohranordnung in einem Verbrennungskessel, welche einen besonders zuverlässigen und langen Betriebszyklus des Verbrennungskessels zwischen zwei Revisionen erlaubt. Der Betrieb des Verbrennungskessels kann so mit einer reduzierten Anzahl an Wärmestromsensoren durchgeführt werden, da die verbleibenden Temperatursensoren noch eine redundante, zuverlässige und ausreichend genaue Ermittlung von Wärmeströmen in der Druckrohranordnung liefern, so dass bspw. eine gezielte Abreinigung und Überwachung der Funktion der Druckrohranordnung möglich ist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt ist. In der Zeichnung zeigt schematisch:
- Fig. 1:: eine schematische Schrägansicht einer erfindungsgemäßen Druckrohranordnung;
- Fig. 2:: eine horizontale Schnittansicht durch eine erfindungsgemäße Druckrohranordnung; und
- Fig. 3:: eine weitere Schrägansicht einer erfindungsgemäßen Druckrohranordnung.

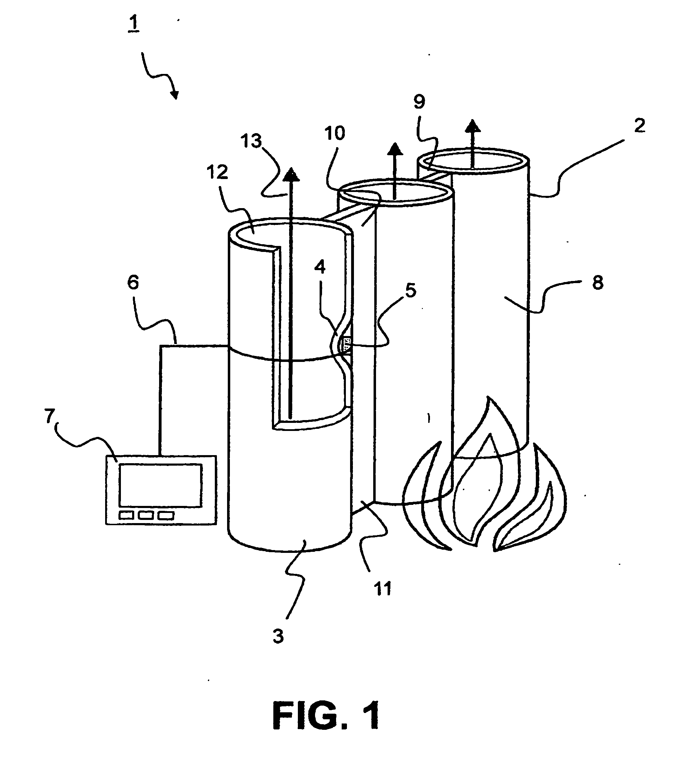

In Fig. 1 ist eine erfindungsgemäße Messeinrichtung 1 für einen Wärmetauscher 2 in einer Schrägansicht dargestellt. Ein erstes Druckrohr 3 ist dabei in einem teilweise geschnittenen Zustand dargestellt, wobei gut erkennbar ist, dass in einer Verprägung 4 ein Wärmestromsensor angeordnet ist, der über eine Leitung 6 mit einer Auswerteeinrichtung 7 verbunden ist.

Der in Fig. 1 gezeigte Wärmetauscher weist eine Feuerungsseite 8 und eine Isolationsseite 9 auf. Die Feuerungsseite 8 ist die der Feuerung zugewandten Seite der Druckrohranordnung 10. Die Druckrohranordnung 10 besteht neben den Druckrohren 3 aus dazwischen liegenden Stegen 11. An den Innenseiten 12 der Druckrohre 3 strömt in Richtung der Pfeile 13 Dampf durch die Druckrohre 3 und nimmt dabei die von der Feuerungsseite 8 auf die Druckrohranordnung 10 einwirkenden Wärmeströme auf.

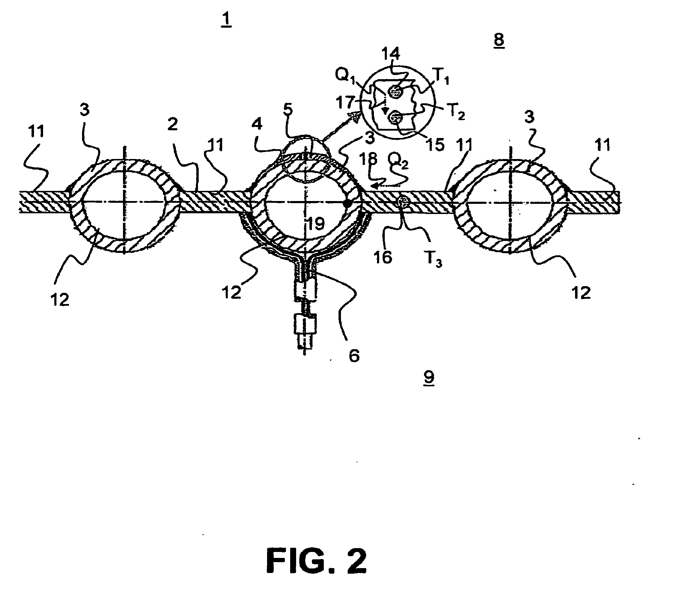

In Fig. 2 ist nun eine bevorzugte Ausführungsform der vorliegenden Erfindung in einer horizontalen Schnittansicht dargestellt. Die Messeinrichtung 1 besteht dabei wiederum aus einem Wärmetauscher 2, der die Druckrohre 3 sowie die dazwischen liegenden Stege 11 umfasst. Der obere Bereich der Zeichnung zeigt die Feuerungsseite 8, und der untere Bereich zeigt die Isolationsseite 9. In der Verprägung 4 des mittleren Druckrohres 3 ist ein Wärmestromsensor 5 angeordnet, der zwei Temperatursensoren 14, 15 umfasst. Grundsätzlich ist dabei anzumerken, dass der Wärmestromsensor 5 wenigstens zwei Temperatursensoren 14, 15 umfasst, wobei durchaus aber auch Wärmestromsensoren mit drei oder mehr Temperatursensoren denkbar sind. Bei dem dargestellten Ausführungsbeispiel ist der Bereich des Wärmestromsensors 5 noch einmal vergrößert dargestellt. In dieser vergrößerten Darstellung ist gut erkennbar, dass der Wärmestromsensor 5 den ersten Temperatursensor 14 zur Messung der Temperatur T₁ und den zweiten Wärmestromsensor 15 zur Messung der Temperatur T, aufweist. Weiterhin umfasst die erfindungsgemäße Messeinrichtung einen dritten Temperatursensor 16, der zur Ermittlung einer dritten Temperatur T₃ genutzt wird. Da die Erfindung nun erkannt hat, dass an der gesamten Innenseite 12 der Druckrohre 3 stets die Temperatur des durchströmenden Dampfes vorherrscht, kann nun neben einem ersten Wärmestrom 17, der mit Q₁ bezeichnet ist, ein zweiter Wärmestrom 18, der mit Q₂ bezeichnet ist, zwischen dem dritten Temperatursensor 16 und bspw. dem Punkt 19 an der Innenseite 12 des Druckrohres 3 berechnet werden. Bei der in Figur 2 gezeigten Ausführungsform der Erfindung ist der dritte Temperatursensor 16 zwischen zwei Stegwänden 11 angeordnet und damit sowohl zur Feuerungsseite 8 als auch zur Isolationsseite 9 geschützt. Bei anderen Ausführungsformen der Erfindung kann der dritte Temperatursensor 16 aber auch unmittelbar auf der Oberfläche der Isolationsseite 9 angeordnet sein. Weiterhin sind am Druckrohr 3 wiederum Leitungsmittel 6 vorgesehen, welche den Wärmestromsensor 5 und den Temperatursensor 16 mit einer Auswerteeinrichtung 7 verbinden.

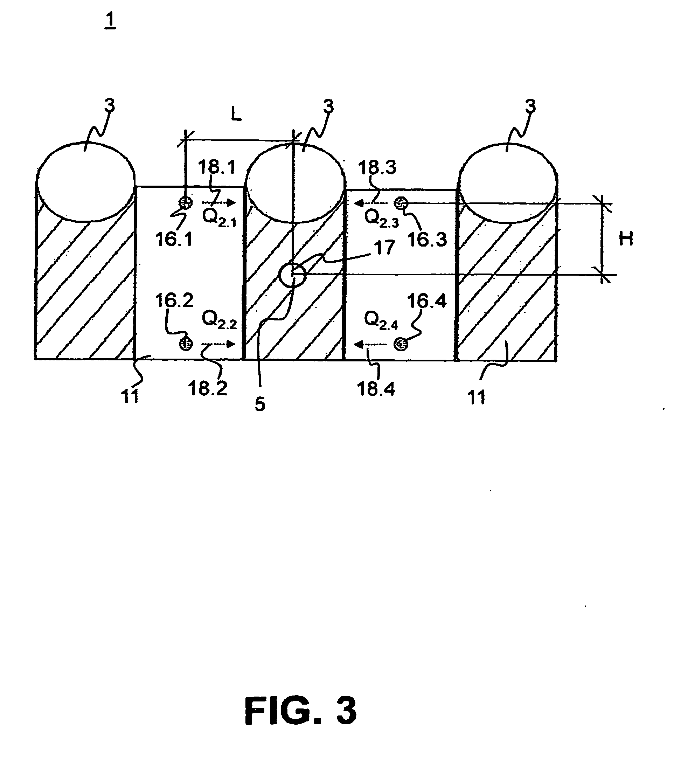

In Fig. 3 ist schließlich eine Ansicht von schräg oben auf eine weitere Ausführungsform einer erfindungsgemäßen Messeinrichtung 1 dargestellt. Am mittleren Druckrohr 3 ist der Wärmestromsensor 5 angeordnet. Um den Wärmestromsensor herum spannen vier dritte Temperatursensoren 16.1, 16.2, 16.3 und 16.4 ein Gitter um den Wärmestromsensor 5 auf. Zusätzlich zu dem normal zur Zeichnungsebene ausgerichteten ersten Wärmestrom 17 kann mit dieser Vorrichtung eine Mehrzahl zusätzlicher Wärmeströme Q₂₁, Q₂₂, Q₂₃ und Q₂₄ ermittelt werden. Hierdurch ist es möglich, die Wärmeströme im Druckrohr 3 und den benachbarten Stegen 11 flächig und sehr genau zu überwachen, wobei gleichzeitig nur ein geringer vorrichtungstechnischer Aufwand benötigt wird.

Insgesamt ist somit festzustellen, dass die vorliegende Erfindung erhebliche Vorteile bei nur sehr geringem technischem Aufwand ermöglicht. Die vorliegende Erfindung ist weiterhin nicht auf die dargestellten Ausführungsbeispiele beschränkt. Vielmehr sind im Rahmen der Erfindung zahlreiche Abwandlungen möglich, die unter den Wortlaut der Patentansprüche fallen. So können bspw. anstelle der dargestellten Geometrien und Anordnungen zahlreiche weitere gewählt werden, mit denen die vorliegende Erfindung realisierbar ist.

### Bezugszeichenliste

- 1: Messeinrichtung
- 2: Wärmetauscher
- 3: Druckrohr
- 4: Verprägung
- 5: Wärmestrornsensor
- 6: Leitung
- 7: Auswerteeinrichtung
- 8: Feuerungsseite
- 9: Isolationsseite
- 10: Druckrohranordnung
- 11: Steg
- 12: Innenseite
- 13: Pfeil
- 14: Erster Temperatursensor
- 15: Zweiter Temperatursensor
- 16: Dritter Temperatursensor
- 17: Erster Wärmestrom
- 18: Zweiter Wärmestrom

## Patentansprüche

1. Messeinrichtung (1) bestehend aus einem Wärmetauscher (2), der eine mit Stegen (11) beabstandete Druckrohranordnung (10) mit einer Feuerungsseite (8) und einer Isolationsseite (9) aufweist und mit mindestens einem Wärmestromsensor (5) ausgeführt ist, wobei
- der Wärmestromsensor (5) an der Feuerungsseite (8) so angeordnet ist, dass dort wenigstens zwei Temperaturen T₁ und T₂ und deren Temperaturdifferenz ermittelbar sind, und
- zusätzlich wenigstens ein Temperatursensor (16) zur Messung einer Temperatur T₃ an der Isolationsseite (9) und beabstandet zum Wärmestromsensor (5) angeordnet ist, **dadurch gekennzeichnet, dass** der wenigstens eine Temperatursensor (16) an einem Steg (11) der Druckrohranordnung (10) angeordnet ist.

2. Messeinrichtung (1) nach dem vorhergehenden Patentanspruch, **dadurch gekennzeichnet, dass** mehrere Temperatursensoren (16) um den Wärmestromsensor (5) herum eine Linie, eine Kurve oder ein Gitter auf der Druckrohranordnung (10) ausbilden.

3. Messeinrichtung (1) nach einem der vorhergehenden Patentansprüche, **dadurch gekennzeichnet, dass** der wenigstens eine Temperatursensor (16) und der wenigstens eine Wärmestromsensor (5) mit einer Auswerteeinrichtung (7) verbunden sind.

4. Verfahren zur Bestimmung von Wärmeflüssen an einer Druckrohranordnung (10) mit einer Messeinrichtung (1) gemäß einem der vorhergehenden Patentansprüche umfassend die Schritte:
a) Erfassen eines ersten Wärmestroms (17) Q₁ durch Messen einer ersten Temperatur T₁ und einer zweiten Temperatur T₂ mittels eines Wärmestromsensors (5);
b) Messen wenigstens einer dritten Temperatur T₃ mit wenigstens einem weiteren Temperatursensor (16) ; und
c) Bestimmen eines zweiten Wärmestromes (18) Q₂ mittels der gemessenen Temperaturen T₁, T₂, T₃ sowie bekannter Dampfparameter des das Druckrohr (3) durchströmenden Dampfes.

5. Verfahren nach dem vorhergehenden Patentanspruch 4, wobei aus einer Mehrzahl von ermittelten Temperaturen (16.1, 16.2, 16.3, 16.4), die in einem Abstand zum Wärmestromsensors (5) gemessen wurden, eine Verteilung des Wärmestroms (Q_{2.1}, Q_{2.2}, Q_{2.3}, Q_{2.4}) entlang einer Linie, Kurve oder über ein Gitter ermittelt wird.

6. Verfahren nach einem der vorhergehenden Patentansprüche 4 oder 5, **dadurch gekennzeichnet, dass** ein zweiter Wärmestrom (18) Q₂ in der Umgebung wenigstens eines Wärmestromsensors (5) mittels der Auswerteeinrichtung (7) ermittelt wird, wobei die Auswerteeinrichtung (7) mindestens eine, von dem wenigstens einen Temperatursensor (16) gemessene, Temperatur T₃ zur Berechnung des zweiten Wärmestroms (18) Q₂ nutzt.

7. Wärmetauscher (2) mit einer Messeinrichtung (1) nach einem der vorhergehenden Patentansprüche 1 bis 3 und einer Auswerteeinrichtung (7), die eingerichtet zur Durchführung des Verfahrens nach einem der Patentansprüche 4 bis 6 ist.

## Claims

1. A measuring device (1) comprising a heat exchanger (2) which has a pressure tube arrangement (10) spaced apart by bars (11) and having a combustion side (8) and an isolation side (9) and is embodied with at least one heat flow sensor (5), wherein
- the heat flow sensor (5) is arranged at the combustion side (8) in such a way that at least two temperatures T₁ and T₂ and the temperature difference thereof can be determined there, and
- at least one temperature sensor (16) for measuring a temperature T₃ is additionally arranged on the isolation side (9) and at a distance from the heat flow sensor (5), **characterized in that** the at least one temperature sensor (16) is arranged on a bar (11) of the pressure tube arrangement (10).

2. The measuring device (1) according to the preceding claim, **characterized in that** a plurality of temperature sensors (16) around the heat flow sensor (5) form a line, a curve or a grid on the pressure tube arrangement (10).

3. The measuring device (1) according to one of the preceding claims, **characterized in that** the at least one temperature sensor (16) and the at least one heat flow sensor (5) are connected to an evaluating device (7).

4. A method for determining heat fluxes at a pressure tube arrangement (10) using a measuring device (1) as claimed in one of the preceding claims, comprising the steps:
a) detecting a first heat flow (17) Q₁ by measuring a first temperature T₁ and a second temperature T₂ by means of a heat flow sensor (5);
b) measuring at least one third temperature T₃ by at least one further temperature sensor (16); and
c) determining a second heat flow (18) Q₂ by means of the measured temperatures T₁, T₂, T₃ and known steam parameters of the steam flowing through the pressure tube (3).

5. The method as claimed in preceding claim 4, wherein a distribution of the heat flow (Q_{2.1}, Q_{2.2}, Q_{2.3}, Q_{2.4}) along a line, a curve or over a grid is determined from a plurality of determined temperatures (16.1, 16.2, 16.3, 16.4) which have been measured at a distance from the heat flow sensor (5).

6. The method as claimed in either of preceding claims 4 or 5, **characterized in that** a second heat flow (18) Q₂ in the vicinity of at least one heat flow sensor (5) is determined by means of the evaluating device (7), the evaluating device (7) utilizing at least one temperature T₃, measured by the at least one temperature sensor (16), for calculating the second heat flow (18) Q₂.

7. A heat exchanger (2) having a measuring device (1) as claimed in one of preceding claims 1 to 3 and an evaluating device (7) which is set up for carrying out the method as claimed in one of patent claims 4 to 6.

## Revendications

1. Dispositif de mesure (1) constitué d'un échangeur de chaleur (2) qui présente
un ensemble (10) de tubes sous pression maintenus à distance par des nervures (11) et dotés d'un côté de combustion (8) et d'un côté isolant (9) et
au moins un capteur (5) de flux thermique,
le capteur (5) de flux thermique étant disposé sur le côté de combustion (8) de telle sorte qu'au moins deux températures T₁ et T₂ et leur différence de température puissent y être déterminées et
au moins un capteur de température (16) qui mesure une température T₃ sur le côté isolant (9) étant maintenu à distance du capteur (5) de flux thermique, **caractérisé en ce que**
le ou les capteurs de température (16) sont disposés sur une nervure (11) de l'ensemble (10) de tubes sous pression.

2. Dispositif de mesure (1) selon la revendication précédente, **caractérisé en ce que** plusieurs capteurs de température (16) disposés autour du capteur (5) de flux thermique forment une ligne, une courbe ou une grille sur l'ensemble (10) de tubes sous pression.

3. Dispositif de mesure (1) selon l'une des revendications précédentes, **caractérisé en ce que** le ou les capteurs de température (16) et le ou les capteurs (5) de flux thermique sont raccordés à un dispositif d'évaluation (7).

4. Procédé de détermination de flux thermiques sur un ensemble (10) de tubes sous pression à l'aide d'un dispositif de mesure (1) selon l'une des revendications précédentes, le procédé comportant les étapes qui consistent à :
a) saisir un premier flux thermique (17) Q₁ par mesure d'une première température T₁ et d'une deuxième température T₂ au moyen d'un capteur (5) de flux thermique,
b) mesurer au moins une troisième température T₃ à l'aide d'au moins un autre capteur de température (16) et
c) déterminer un deuxième flux thermique (18) Q₂ au moyen des températures T₁, T₂, T₃ mesurées ainsi que de paramètres connus de la vapeur qui traverse le tube sous pression (3).

5. Procédé selon la revendication 4 qui précède, dans lequel une répartition du flux thermique (Q_{2.1}, Q_{2.2}, Q₂.₃, Q₂.₄) le long d'une ligne, d'une courbe ou d'une grille est déterminée à partir de plusieurs températures (16.1, 16.2, 16.3, 16.4) déterminées et mesurées à distance du capteur (5) de flux thermique.

6. Procédé selon l'une des revendications 4 ou 5 qui précèdent, **caractérisé en ce qu'**un deuxième flux thermique (18) Q₂ est déterminé dans l'environnement d'au moins un capteur (5) de flux thermique au moyen du dispositif d'évaluation (7), le dispositif d'évaluation (7) utilisant au moins une température T₃ mesurée par le ou les capteurs de température (16) pour calculer le deuxième flux thermique (18) Q₂.

7. Echangeur de chaleur (2) doté d'un dispositif de mesure (1) selon l'une des revendications 1 à 3 qui précèdent et d'un dispositif d'évaluation (7) conçu pour exécuter le procédé selon l'une des revendications 4 à 6.
